# EUROPEAN PATENT APPLICATION

(11) **EP 4 825 620 A1**
(43) Date of publication of application: **21.10.2026**
(21) Application number: 25858963.9
(22) Date of filing: 12.08.2025
(51) Int. Cl.: B60J 7/00, B60R 16/023

(54) **CONTROL METHOD AND APPARATUS FOR CAMPING MODE OF VEHICLE, VEHICLE, AND STORAGE MEDIUM**

(30) Priority: 02.09.2024 CN 202411222487
(71) Applicant: Chery Automobile Co., Ltd., Wuhu, Anhui 241006 (CN)
(72) Inventor: FENG, Yu, Wuhu, Anhui 241006 (CN); REN, Dianquan, Wuhu, Anhui 241006 (CN); SHAO, Lin, Wuhu, Anhui 241006 (CN); LI, Xiaoping, Wuhu, Anhui 241006 (CN); YU, Xiaochen, Wuhu, Anhui 241006 (CN)
(74) Representative: Adamson Jones
(86) International application number: PCT/CN2025/114213
(87) International publication number: WO 2026/045919

(57) **Abstract**

The present application relates to the technical field of intelligent vehicle control, and in particular to a control method and apparatus for a camping mode of a vehicle, a vehicle, and a storage medium. The method comprises: when it is detected that a vehicle enters a camping mode, acquiring parking information and ignition information of the vehicle, and determining whether the vehicle satisfies a preset independent control condition; and in response to the vehicle satisfying the preset independent control condition, generating a control shielding signal of a sunroof on the basis of the camping mode, and using the control shielding signal to shield a linkage program between sunroof glass and a sunshade, so that the sunroof glass and the sunshade operate in response to an independent control instruction. According to embodiments of the present application, by acquiring an ignition state and a parking state of the vehicle to determine whether to shield the linkage control between the sunroof glass and the sunshade, it is convenient for users to independently control the sunshade and the sunroof glass of the vehicle according to actual use requirements, thereby improving the user experience, and achieving stronger flexibility and intelligence of vehicle control.

## Description

This application is based upon and claims priority to Chinese Patent Application No. 202411222487.8, filed September 2, 2024, and entitled "VEHICLE CAMPING MODE CONTROL METHOD AND DEVICE, VEHICLE AND STORAGE MEDIUM," the entire contents of which are incorporated herein by reference.

### TECHNICAL FIELD

The present disclosure relates to the technical field of vehicle intelligent control, and particularly to a method and apparatus for controlling a camping mode of a vehicle, a vehicle, and a storage medium.

### BACKGROUND

With the continuous enrichment of automobile functions, the supporting facilities for vehicles have also increased. As one of the important facilities of vehicles, the sunroof is installed on the roof of the vehicle, which facilatates the circulation of fresh air, broadens the field of vision, and improves the riding experience. The sunroof of the vehicle is often equipped with a sunshade to block heat and intense sunlight and at the same time prevent mosquitoes or foreign objects from entering the vehicle.

### SUMMARY

The present disclosure provides a method and an apparatus for controlling a camping mode of a vehicle, a vehicle, and a storage medium.

In a first aspect, the embodiments of the present disclosure provide a method for controlling a camping mode of a vehicle, including: acquiring parking information and ignition information of the vehicle in response to detecting that the vehicle enters the camping mode; determining whether the vehicle meets a predetermined independent control condition based on the parking information and the ignition information; generating a control masking signal for a sunroof of the vehicle based on the camping mode in response to the vehicle meeting the predetermined independent control condition, and masking a linkage program of a sunroof glass and a sunshade of the vehicle using the control masking signal to cause the sunroof glass and sunshade to operate in response to independent control instructions; and stopping the masking for the linkage program of the sunroof glass and the sunshade in response to the vehicle exiting the camping mode.

In some embodiments of the present disclosure, subsequent to determining whether the vehicle meets the predetermined independent control condition based on the parking information and the ignition information, the method further includes: generating one or more reminder messages based on the parking information and the ignition information in response to the vehicle not meeting the predetermined independent control condition; and providing a parking operation reminder and/or an ignition operation reminder using the one or more reminder messages.

In some embodiments of the present disclosure, subsequent to providing the parking operation reminder and/or the ignition operation reminder using the one or more reminder messages, the method further includes: acquiring updated parking information and ignition information in response to reminder time of the one or more reminder messages being greater than or equal to a predetermined time interval, and determining whether the updated parking information and ignition information meet a predetermined switching completion condition; and determining that the vehicle meets the predetermined independent control condition in response to the updated parking information and ignition information meeting the predetermined switching completion condition; or determining that the vehicle does not meet the predetermined independent control condition in response to the updated parking information and ignition information not meeting the predetermined switching completion condition, and controlling the vehicle to exit the camping mode.

In some embodiments of the present disclosure, subsequent to masking the linkage program of the sunroof glass and the sunshade of the vehicle using the control masking signal, the method further includes: sending a camping shutdown reminder in response to detecting one or more gear adjustment signals, and determining whether a camping mode shutdown instruction is detected; and exiting the camping mode based on the camping mode shutdown instruction in response to detecting the camping mode shutdown instruction; or controlling the vehicle to maintain a parking gear in response to failing to detect the camping mode shutdown instruction.

In some embodiments of the present disclosure, prior to exiting the camping mode based on the camping mode shutdown instruction, the method further includes: checking whether an opening state of the sunroof meets a predetermined exit condition; and in a case that the opening state of the sunroof does not meet the predetermined exit condition, stopping shutting down the camping mode and controlling the vehicle to maintain the parking gear.

In some embodiments of the present disclosure, subsequent to masking the linkage program of the sunroof glass and the sunshade of the vehicle using the control masking signal, the method further includes: determining whether one or more ignition-off instructions are detected; and masking an automatic closing program of the sunroof in response to detecting the one or more ignition-off instructions.

In a second aspect, the embodiments of the present disclosure provide an apparatus for controlling a camping mode of a vehicle, including: an acquiring module, configured to: acquire parking information and ignition information of the vehicle in response to detecting that the vehicle enters the camping mode; a determining module, configured to: determine whether the vehicle meets a predetermined independent control condition based on the parking information and the ignition information; and a controlling module, configured to: generate a control masking signal for a sunroof of the vehicle based on the camping mode in response to the vehicle meeting the predetermined independent control condition, and mask a linkage program of a sunroof glass and a sunshade of the vehicle using the control masking signal to enable the sunroof glass and sunshade to operate in response to independent control instructions; wherein the control module is further configured to: stop masking the linkage program of the sunroof glass and the sunshade in response to the vehicle exiting the camping mode.

In some embodiments of the present disclosure, the apparatus further includes: a generating module, configured to: subsequent to determining whether the vehicle meets the predetermined independent control condition based on the parking information and the ignition information, generate one or more reminder messages based on the parking information and the ignition information in response to the vehicle not meeting the predetermined independent control condition; and a reminding module, configured to: provide a parking operation reminder and/or an ignition operation reminder using the one or more reminder messages.

In some embodiments of the present disclosure, the apparatus further includes: a first judgining module, configured to: subsequent to providing the parking operation reminder and/or the ignition operation reminder using the one or more reminder messages, acquire updated parking information and ignition information in response to reminder time of the one or more reminder messages being greater than or equal to a predetermined time interval, and determine whether the updated parking information and ignition information meet a predetermined switching completion condition; and a determining module, configured to: determine that the vehicle meets the predetermined independent control condition in response to the updated parking information and ignition information meeting the predetermined switching completion condition; or determine that the vehicle does not meet the predetermined independent control condition in response to the updated parking information and ignition information not meeting the predetermined switching completion condition, and controlling the vehicle to exit the camping mode.

In some embodiments of the present disclosure, the apparatus further includes: a second judging module, configured to: subsequent to masking the linkage program of the sunroof glass and the sunshade of the vehicle using the control masking signal, send a camping shutdown reminder in response to detecting one or more gear adjustment signals, and determine whether a camping mode shutdown instruction is detected; and an exiting module, configured to: exit the camping mode based on the camping mode shutdown instruction in response to detecting the camping mode shutdown instruction; or control the vehicle to maintain a parking gear in response to failing to detect the camping mode shutdown instruction.

In some embodiments of the present disclosure, the exiting module includes: a checking unit, configured to: prior to exiting the camping mode based on the camping mode shutdown instruction, check whether an opening state of the sunroof meets a predetermined exit condition; and a stopping unit, configured to: in a case that the opening state of the sunroof does not meet the predetermined exit condition, stop shutting down the camping mode and controlling the vehicle to maintain the parking gear.

In some embodiments of the present disclosure, the apparatus further includes: a third judging module, configured to: subsequent to masking the linkage program of the sunroof glass and the sunshade of the vehicle using the control masking signal, determine whether one or more ignition-off instructions are detected; and a masking module, configured to: mask an automatic closing program of the sunroof in response to detecting the one or more ignition-off instructions.

In a third aspect, the embodiments of the present disclosure provide a vehicle, including: a memory, a processor, and a computer program stored in the memory and runnable on the processor. The processor, when loading and running the computer program, is caused to perform the method for controlling a camping mode of a vehicle as described above.

In a fourth aspect, the embodiments of the present disclosure provide a computer-readable storage medium, storing a computer program therein. The program, when loaded and executed by a processor, causes the processor to perform the method for controlling a camping mode of a vehicle described above.

In a fifth aspect, the embodiments of the present disclosure provide a computer program. The computer program, when loaded and executed by a processor, causes the processor to perform the method for controlling a camping mode of a vehicle described above.

Additional aspects and advantages of the present disclosure are set forth in part in the description hereafter, and in part will be obvious from the description, or may be learned by practice of the present disclosure.

### BRIEF DESCRIPTION OF DRAWINGS

The above and/or additional aspects and advantages of the present disclosure will become apparent and readily understood from the following description of embodiments, taken in conjunction with the accompanying drawings, wherein:
FIG. 1 is a flowchart of a method for controlling a camping mode of a vehicle according to some embodiments of the present disclosure;
FIG. 2 is a schematic diagram showing the control integration and sunroof components of the vehicle camping mode according to some embodiments of the present disclosure;
FIG. 3 is a schematic diagram of the working principle of the camping mode according to some embodiments t of the present disclosure;
FIG. 4 is a schematic diagram of the exit principle of the camping mode according to some embodiments of the present disclosure;
FIG. 5 is a schematic structural diagram of an apparatus for controlling a camping mode of a vehicle according to some embodiments of the present disclosure; and
FIG. 6 is a schematic structural diagram of a vehicle according to some embodiments of the present disclosure.

### DETAILED DESCRIPTION

The embodiments of the present disclosure are described in detail hereafter, and examples of the embodiments are shown in the accompanying drawings, wherein the same or similar reference numerals throughout indicate the same or similar elements or elements having the same or similar functions. The embodiments described below with reference to the drawings are exemplary and are intended to explain the present disclosure, and should not be construed as limiting the present disclosure.

A method and an apparatus for controlling a camping mode of a vehicle, a vehicle, and a storage medium according to the embodiments of the present disclosure are described hereafter with reference to the accompanying drawings.

In related arts, there exists a pressure difference between the inside and outside of the vehicle's roof during driving. In the case that the sunshade is still closed after the sunroof glass is opened, the sunshade is likely be damaged due to its soft texture, which cannot withstand the pressure difference, posing a driving safety hazard. To ensure user safety, the sunroof control must have a linkage logic that allows the sunroof glass and sunshade to be opened and closed simultaneously.

However, in related arts, the linkage logic for simultaneously opening and closing the sunroof glass and the sunshade is difficult to meet users' needs in special scenarios. It is unable to disengage the linkage control between the sunroof glass and the sunshade based on actual usage, affecting the user experience.

In view of the issue in the related art mentioned in the aforementioned background technology, where the linkage logic for simultaneously opening and closing the sunroof glass and the sunshade is difficult to meet user needs in special scenarios, and the linkage control between the sunroof movable glass and the sunshade cannot be released according to actual usage conditions, affecting the user experience, the present disclosure provides a method for controlling a camping mode of a vehicle. In this method, the vehicle ignition status and parking status are acquired for judgment to confirm whether to mask the linkage control for the sunroof glass and the sunshade, thereby facilitating users to independently control the sunshade and sunroof glass of the vehicle according to actual usage needs, enhancing the user experience and improving the flexibility and intelligence of vehicle control. Consequently, the issues in the related art, such as the difficulty in meeting user needs in special scenarios with the linkage logic for simultaneously opening and closing the sunroof glass and sunshade, and the inability to release the linkage control between the sunroof movable glass and sunshade according to actual usage conditions, affecting the user experience, are addressed.

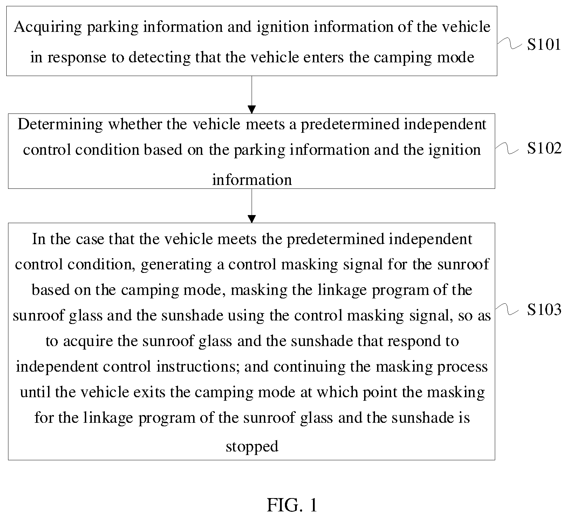

Specifically, FIG. 1 is a flowchart of a method for controlling a camping mode of a vehicle according to some embodiments of the present disclosure. In some embodiments, the method of the present disclosure is executed by the vehicle terminal or the body control module of the vehicle, or implemented with the cooperation of multiple controllers and/or the vehicle terminal within the vehicle.

As shown in FIG. 1, the method for controlling the camping mode of the vehicle includes the following processes.

In process S101, in response to detecting that the vehicle enters the camping mode, parking information and ignition information of the vehicle are acquired.

It can be understood that in the embodiments of the present disclosure, the camping mode provides a convenience function for the user through the cockpit service, which provides users with special cabin settings in the case where the vehicle is in the camping mode, thereby enhancing comfort and convenience in camping and other situations. Upon detecting that the vehicle has entered camping mode, such as in the case that the user selects to activate the camping mode through the interactive system, the parking information of the vehicle is acquired. In some embodiments, the parking information includes information indicating whether the vehicle has stopped steadily and is in a parking state, which is confirmed by the vehicle's P-gear sensor in some embodiments. Additionally, the ignition information of the vehicle is acquired, which represents the ignition status of the vehicle. Based on the ignition information, it is confirmed whether the vehicle has been started. In some embodiments, the ignition information is represented by the ignition switch status of the vehicle or engine management data.

In process S102, it is determined whether the vehicle meets the predetermined independent control condition based on the parking information and the ignition information.

It should be noted that the predetermined independent control condition is by those skilled in the art according to the actual situation, and is not specifically limited here.

It can be understood that in some embodiments of the present disclosure, the predetermined independent control condition includes that the parking information indicates that the vehicle is already parked and the ignition information indicates that the vehicle is already in an ignited state. In some embodiments, in the case that the start-stop gear of the vehicle is already in the P position and the on-off switch of the vehicle is already in the ON position, it is determined that the vehicle meets the predetermined independent control condition. Otherwise, it is determined that the vehicle does not meet the predetermined independent control condition. In the case that the vehicle meets the predetermined independent control condition, it is confirmed that the vehicle's sunroof glass and sunshade are able to be independently controlled. Because the sunroof is a high-power electrical component, it is necessary to ensure that the vehicle is in the ON position to achieve active control.

In some embodiments of the present disclosure, subsequent to determining whether the vehicle meets the predetermined independent control condition based on the parking information and the ignition information, the method further includes: generating one or more reminder messages based on the parking information and the ignition information in response to the vehicle not meeting the predetermined independent control condition; and reminding the user to perform a parking operation and/or an ignition operation of the vehicle using the one or more reminder messages. That is, subsequent to one or more reminder messages being generated, a parking operation reminder and/or an ignition operation reminder are provided using the one or more reminder messages.

During actual execution, providing a parking operation reminder includes popping up a window on the vehicle's central control screen, reminding "The vehicle is not in P gear, please park"; and providing an ignition operation reminder includes popping up a window on the central control screen, reminding "Please switch the vehicle to ON position" or other interactive messages. In this way, users are reminded to perform operations to ensure that the vehicle meets the prerequisites for implementing camping mode functions.

In some embodiments of the present disclosure, subsequent to reminding the user to perform a parking operation and/or an ignition operation of the vehicle using the one or more reminder messages (i.e., subsequent to providing the parking operation reminder and/or the ignition operation reminder using the one or more reminder messages), the method further includes: acquiring updated parking information and ignition information in response to reminder time of the one or more reminder messages being greater than or equal to a predetermined time interval, and determining whether the updated parking information and ignition information meet a predetermined switching completion condition; and determining that the vehicle meets the predetermined independent control condition in response to the updated parking information and ignition information meeting the predetermined switching completion condition, otherwise, controlling the vehicle to exit the camping mode. That is, it is determined that the vehicle meets the predetermined independent control condition in response to the updated parking information and ignition information meeting the predetermined switching completion condition; or it is determined that the vehicle does not meet the predetermined independent control condition in response to the updated parking information and ignition information not meeting the predetermined switching completion condition, and the vehicle is controlled to exit the camping mode.

It should be noted that the predetermined time interval and predetermined switching completion condition are set by those skilled in the art according to the actual situation, and are not specifically limited here. In some embodiments, the reminder time of the reminder message is the time duration acquired by starting the timing when the reminder is provided.

During the actual execution process, the reminder message prompts the user to pay attention to the current parking or ignition status of the vehicle. In the case that the reminder time is greater than or equal to the predetermined time interval, the vehicle's parking and ignition information is re-obtained to acquire updated parking information and ignition information. Then, it is determined whether the updated parking information and ignition information meet the predetermined switching completion condition, that is, whether the vehicle has completed the switching of parking status and ignition status. In the case that the updated parking information and ignition information meet the predetermined switching completion condition, it is determined that the vehicle meets the predetermined independent control condition. Otherwise, it is determined that the user's intention to turn on the camping mode has disappeared, and the vehicle is controlled to exit the camping mode.

In process S103, in the case that the vehicle meets the predetermined independent control condition, a control masking signal for the sunroof is generated based on the camping mode. The linkage program of the sunroof glass and the sunshade is masked using the control masking signal, so as to acquire the sunroof glass and the sunshade that respond to independent control instructions. The masking process continues until the vehicle exits the camping mode, at which point the masking for the linkage program of the sunroof glass and the sunshade is stopped. In other words, a control masking signal for a sunroof of the vehicle is generated based on the camping mode in response to the vehicle meeting the predetermined independent control condition, and a linkage program of a sunroof glass and a sunshade of the vehicle is masked using the control masking signal to enable the sunroof glass and sunshade to operate in response to independent control instructions; and the masking for the linkage program of the sunroof glass and the sunshade is stopped in response to the vehicle exiting the camping mode.

It can be understood that in the embodiments of the present disclosure, the linkage program of the sunroof glass and the sunshade is the default control logic for the sunroof glass and the sunshade. That is, in the case that the user operates one of them, the other follows the control instruction, achieving linkage control. The control masking signal is used to temporarily interrupt or mask the default linkage control between the sunroof glass and the sunshade. That is, under the current vehicle state, the user is able to independently control the sunroof glass and the sunshade without being restricted by the default linkage logic. In the case that the vehicle exits the camping mode, the control masking signal is stopped to be sent, and the linkage program of the sunroof glass and the sunshade resumes operation. That is, the default linkage control logic is re-operated to ensure driving safety. In this way, the flexibility of user operation is increased.

In some embodiments of the present disclosure, subsequent to masking the linkage program of the sunroof glass and sunshade of the vehicle using the control masking signal, the method further includes: sending a camping shutdown reminder in response to detecting one or more gear adjustment signals, and determining whether a camping mode shutdown instruction is detected; and exiting the camping mode based on the camping mode shutdown instruction in response to detecting the camping mode shutdown instruction; or controlling the vehicle to maintain a parking gear in response to failing to detect the camping mode shutdown instruction. That is, subsequent to masking the linkage program of the sunroof glass and the sunshade using the control masking signal, the method further includes: sending a camping shutdown reminder to the user in response to detecting one or more gear adjustment signals, and determining whether the user gives a camping mode shutdown instruction; and in the case that the user gives a camping mode shutdown instruction, exiting the camping mode based on the camping mode shutdown instruction; otherwise, controlling the vehicle to maintain the parking gear.

In the actual execution process, the gear adjustment signal is a signal indicating a change in the vehicle's gear position, reflecting the user's operation to alter the vehicle's gear state. In some embodiments, the camping shutdown reminder is a reminder message sent to the user, prompting the user whether to exit the camping mode. Subsequent to receiving the user's instruction to exit the camping mode, the vehicle exits the camping mode based on that instruction and reverts to the standard operation mode; otherwise, the vehicle is controlled to maintain its current parking gear state, continuing to maintain the independent control state under the camping mode. This ensures that after the vehicle is driven to run, the sunroof glass and sunshade return to their default linkage state.

In some embodiments of the present disclosure, prior to exiting the camping mode based on the camping mode shutdown instruction, the method further includes: checking whether an opening state of the sunroof meets a predetermined exit condition; and in a case that the opening state of the sunroof does not meet the predetermined exit condition, stopping shutting down the camping mode and controlling the vehicle to maintain the parking gear.

It should be noted that the predetermined exit condition is set by those skilled in the art according to the actual situation, and are not specifically limited herein. In the present disclosure, "sunroof" refers to the sunroof module or sunroof assembly, including the sunroof glass and sunshade.

In some embodiments, the predetermined exit condition includes that both the sunroof glass and the sunshade in the vehicle's sunroof are fully closed. In the case that the sunroof's opening state meets the predetermined exit condition (the sunroof is fully closed), the operation to exit the camping mode continues. In the case that the sunroof's opening state does not meet the predetermined exit condition (the sunroof is partially or fully opened), the operation to exit the camping mode is stopped, and the current parking gear state is maintained to avoid the user operating the vehicle for driving. This prevents potential risks caused by the sunroof not being closed.

In some embodiments of the present disclosure, subsequent to masking the linkage program of the sunroof glass and the sunshade using the control masking signal, the method further includes: determining whether the user gives one or more ignition-off instructions; and masking the automatic closing program of the sunroof in the case where the user gives one or more ignition-off instructions. That is, it is determined whether one or more ignition-off instructions are detected; and an automatic closing program of the sunroof is masked in response to detecting the one or more ignition-off instructions.

In the actual execution process, the ignition-off instruction is given by the user to turn off the vehicle engine in some embodiments, such as the user turning the ignition switch to the "OFF" position. The automatic closing program of the sunroof includes: in the case that the sunroof is partially or fully opened and the vehicle is in an ignition-off state, the program is automatically activated to close the sunroof to ensure the safety of the vehicle and prevent burglary. However, in the case that the vehicle is in the camping mode, the automatic closing program of the sunroof is masked to prevent the sunroof from automatically closing upon the user giving the ignition-off instruction. In this way, users obtain more personalized vehicle control options and the intelligence level of the vehicle system is enhanced.

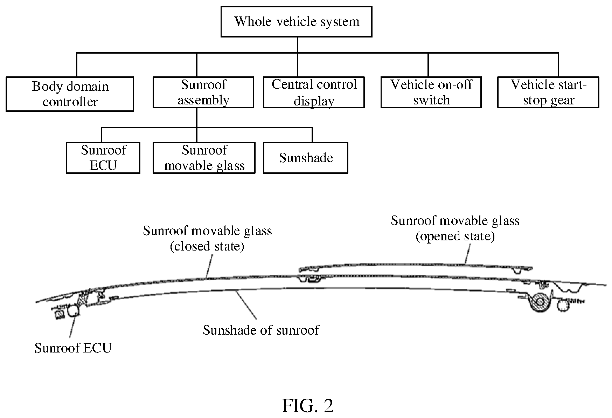

The working content of embodiments of the present disclosure is elaborated in detail with a specific embodiment. As shown in FIG. 2, which a schematic diagram showing the control integration and sunroof components in the vehicle with a camping mode according to some embodiments of the present disclosure, the embodiments involve the body domain controller, sunroof assembly, central control display, vehicle on-off switch, and vehicle start-stop gear under the whole vehicle system. The subcomponents of the sunroof assembly include the sunroof ECU (Engine Control Unit), sunroof movable glass, and sunroof sunshade; the vehicle on-off switch has an ON (ignition) position, an ACC (accessory power on) position, and an OFF (ignition-off) position; and the vehicle start-stop gear has a N (neutral) position, a R (reverse) position, a D (drive) position, and a P (parking) position.

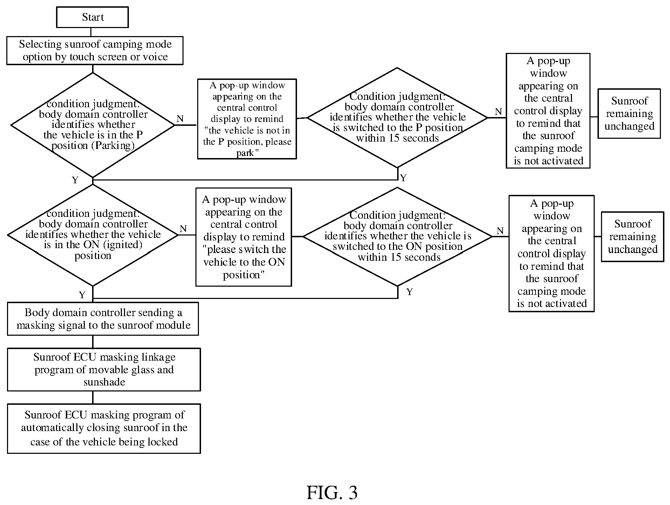

FIG. 3 is a schematic diagram of the working principle of the camping mode according to some embodiments of the present disclosure. The user activates the sunroof camping mode option by clicking on the camping mode on the central control display or saying "open camping mode". Condition judgment is performed: the body domain controller identifies whether the vehicle start-stop gear is in the P position. In response to a negative result, a pop-up window appears on the central control display to remind "the vehicle is not in the P position, please park". Condition judgment is performed: the body domain controller identifies whether the vehicle start-stop gear is switched to the P position within 15 seconds. In response to a negative result, it is assumed that the intention to enter the camping mode is no longer present, and a pop-up window appears on the central control display to remind that the sunroof camping mode is not activated. In the case that the vehicle start-stop gear is in the P position, further condition judgment is performed: the body domain controller identifies whether the vehicle on-off switch is in the ON position. In response to a negative result, a pop-up window appears on the central control display to remind "please switch the vehicle to the ON position", and condition judgment is performed: the body domain controller identifies whether the vehicle on-off switch is switched to the ON position within 15 seconds. In response to a negative result, a pop-up window appears on the central control display to remind that the sunroof camping mode is not activated, and the sunroof assembly does not act, maintaining the current status. In the case that the vehicle on-off switch is in the ON position, the body domain controller sends a sunroof movable glass and sunshade independent control activation signal (i.e., a control masking signal) to the sunroof ECU. The sunroof ECU masks the linkage program of the sunroof movable glass and the sunshade, allowing the user to control the movable glass and sunshade separately.

In the camping scenario, considering that users possibly choose to park with the engine off for an extended period to conserve energy and rest in the vehicle, the sunroof ECU executes a program to mask the logic of automatically closing the sunroof in the case of the vehicle being locked in camping mode. In this way, in the case that the user actively locks the vehicle or the vehicle automatically locks in response to the engine being turned off, the sunroof glass remains in its original state.

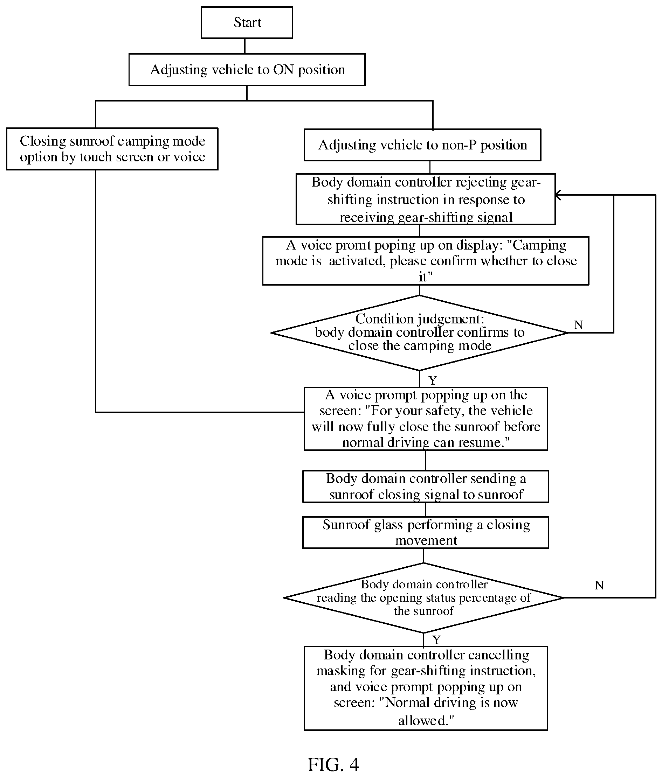

FIG. 4 illustrates the schematic diagram of the exit principle of the camping mode according to some embodiments of the present disclosure. Firstly, the exit of camping mode is performed under the conditions that the vehicle is ignited, the vehicle is in the ON position, and the sunroof is controllable. There are two ways to close the camping mode. Firstly, the user adjusts the vehicle start-stop gear to a non-P position, at which point the sunroof glass is possibly in an opened state and the sunshade is possibly in a closed state; the body domain controller rejects the gear-shifting instruction in response to receiving the gear-shifting signal, forcing the vehicle to remain in the parking position; the central control display pops up a prompt: "Camping mode is being activated, please confirm whether to close it"; a condition judgement is performed: the body domain controller determines whether the user confirms the closure of camping mode by voice or touching the screen within 15 seconds; and in response to a negative result, the gear-shifting instruction is invalid, and the camping mode and sunroof status remain unchanged. The second way to close the camping mode is to actively close it through touch screen or voice.

In response to receiving the instruction to close the camping mode, a voice prompt pops up on the screen: "For your safety, the vehicle will now fully close the sunroof before normal driving can resume." The body domain controller sends a sunroof closing signal to the sunroof ECU to make the sunroof glass perform a closing movement. A condition judgement is performed: the body domain controller reads the opening status percentage of the sunroof and determines whether the sunroof glass is fully closed. In response to a negative result, the state of rejecting the gear-shifting instruction remains unchanged; and in response to a positive result, the body domain controller cancels the masking for the gear-shifting instruction, and a voice prompt pops up on the screen: "Normal driving is now allowed." At this point, the camping mode is closed; the masking for the linkage program of sunroof movable glass and sunshade, as well as the program for automatically closing the sunroof in response to the vehicle being locked, is also cancelled accordingly, and the sunroof assembly returns to its normal state.

According to the method for controlling a camping mode of a vehicle provided in embodiments of the present disclosure, the vehicle ignition status and parking status are acquired for judgment to confirm whether to mask the linkage control for the sunroof glass and the sunshade, thereby facilitating users to independently control the sunshade and sunroof glass of the vehicle according to actual usage needs, enhancing the user experience and improving the flexibility and intelligence of vehicle control. Consequently, the issues in the related art, such as the difficulty in meeting user needs in special scenarios with the linkage logic for simultaneously opening and closing the sunroof glass and sunshade, and the inability to release the linkage control between the sunroof movable glass and sunshade according to actual usage conditions, affecting the user experience, are addressed.

Next, an apparatus for controlling a camping mode of a vehicle according to embodiments of the present disclosure is described with reference to the accompanying drawings.

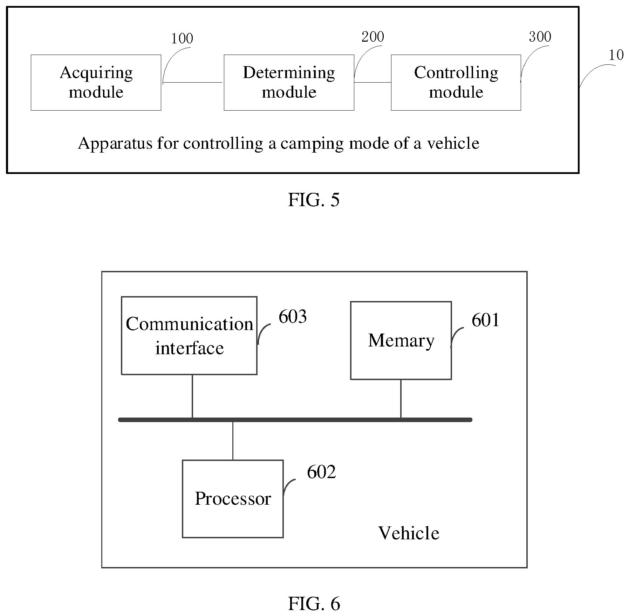

FIG. 5 is a schematic structural diagram of an apparatus for controlling a camping mode of a vehicle according to embodiments of the present disclosure.

As shown in FIG. 5, the apparatus 10 for controlling the camping mode of the vehicle includes an acquiring module 100, a determining module 200, and a controlling module 300.

The acquiring module 100 is configured to: acquire parking information and ignition information of the vehicle in response to detecting that the vehicle enters the camping mode;

The determining module 200 is configured to: determine whether the vehicle meets a predetermined independent control condition based on the parking information and the ignition information.

The controlling module 300 is configured to: generate a control masking signal for a sunroof of the vehicle based on the camping mode in response to the vehicle meeting the predetermined independent control condition, and mask a linkage program of a sunroof glass and a sunshade of the vehicle using the control masking signal to enable the sunroof glass and sunshade to operate in response to independent control instructions; and stop masking the linkage program of the sunroof glass and the sunshade in response to the vehicle exiting the camping mode.

In some embodiments of the present disclosure, the apparatus 10 further includes:
a generating module, configured to: subsequent to determining whether the vehicle meets the predetermined independent control condition based on the parking information and the ignition information, generate one or more reminder messages based on the parking information and the ignition information in response to the vehicle not meeting the predetermined independent control condition; and
a reminding module, configured to: remind the user to perform a parking operation and/or an ignition operation of the vehicle using the one or more reminder messages. That is, a parking operation reminder and/or an ignition operation reminder are provided using the one or more reminder messages.

In some embodiments of the present disclosure, the apparatus 10 further includes:
a first judging module, configured to: subsequent to reminding the user to perform a parking operation and/or an ignition operation of the vehicle using the one or more reminder messages, acquire updated parking information and ignition information in response to reminder time of the one or more reminder messages being greater than or equal to a predetermined time interval, and determine whether the updated parking information and ignition information meet a predetermined switching completion condition; and
a determining module, configured to: determine that the vehicle meets the predetermined independent control condition in response to the updated parking information and ignition information meeting the predetermined switching completion condition, otherwise, control the vehicle to exit the camping mode. That is, it is determined that the vehicle meets the predetermined independent control condition in response to the updated parking information and ignition information meeting the predetermined switching completion condition; or it is determined that the vehicle does not meet the predetermined independent control condition in response to the updated parking information and ignition information not meeting the predetermined switching completion condition, and the vehicle is controlled to exit the camping mode.

In some embodiments of the present disclosure, the apparatus 10 further includes:
a second judging module, configured to: subsequent to masking the linkage program of the sunroof glass and sunshade of the vehicle using the control masking signal, send a camping shutdown reminder to the user in response to detecting one or more gear adjustment signals, and determine whether a camping mode shutdown instruction is given by the user (i.e., send a camping shutdown reminder in response to detecting one or more gear adjustment signals, and determine whether a camping mode shutdown instruction is detected); and
an exiting module, configured to: exit the camping mode based on the camping mode shutdown instruction in response to the user giving the camping mode shutdown instruction; otherwise, control the vehicle to maintain the parking gear (i.e., exit the camping mode based on the camping mode shutdown instruction in response to detecting the camping mode shutdown instruction; or control the vehicle to maintain a parking gear in response to failing to detect the camping mode shutdown instruction).

In some embodiments of the present disclosure, the exiting module includes:
a checking unit, configured to: prior to exiting the camping mode based on the camping mode shutdown instruction, check whether an opening state of the sunroof meets a predetermined exit condition; and
a stopping unit, configured to: in a case that the opening state of the sunroof does not meet the predetermined exit condition, stop shutting down the camping mode and controlling the vehicle to maintain the parking gear.

In some embodiments of the present disclosure, the apparatus 10 further includes:
a third judging module, configured to: subsequent to masking the linkage program of the sunroof glass and the sunshade using the control masking signal, determine whether the user gives one or more ignition-off instructions (i.e., determine whether one or more ignition-off instructions are detected); and
a masking module, configured to: mask the automatic closing program of the sunroof in the case where the user gives one or more ignition-off instructions (i.e., mask the automatic closing program of the sunroof in response to detecting the one or more ignition-off instructions).

It should be noted that the explanation of the embodiment of the method for controlling the camping mode of the vehicle mentioned above also applies to the apparatus for controlling the camping mode of the vehicle in the embodiments, and is not repeated here.

According to the apparatus for controlling the camping mode of the vehicle provided in the embodiments of the present disclosure, the vehicle ignition status and parking status are acquired for judgment to confirm whether to mask the linkage control for the sunroof glass and the sunshade, thereby facilitating users to independently control the sunshade and sunroof glass of the vehicle according to actual usage needs, enhancing the user experience and improving the flexibility and intelligence of vehicle control. Consequently, the issues in the related art, such as the difficulty in meeting user needs in special scenarios with the linkage logic for simultaneously opening and closing the sunroof glass and sunshade, and the inability to release the linkage control between the sunroof movable glass and sunshade according to actual usage conditions, affecting the user experience, are addressed.

FIG. 6 is a schematic structural diagram of a vehicle provided in embodiments of the present disclosure. In some embodiments, the vehicle includes:
a memory 601, a processor 602, and one or more computer programs stored in the memory 601 and runnable on the processor 602.

The processor 602, when loading and running the computer program, is caused to perform the method for controlling the camping mode of the vehicle provided in the aforementioned embodiments.

Furthermore, the vehicle further includes:
a communication interface 603, configured for communication between the memory 601 and the processor 602.

The memory 601 is configured for storing computer programs that runnable on the processor 602.

In some embodiments, the memory 601 includes high-speed RAM memory, or includes non-volatile memory, such as at least one disk memory.

In the case that the memory 601, processor 602, and communication interface 603 are implemented independently, the communication interface 603, memory 601, and processor 602 are interconnected and complete communication among them via a bus. In some embodiments, the bus includes an Industry Standard Architecture (ISA) bus, Peripheral Component Interconnect (PCI) bus, or Extended Industry Standard Architecture (EISA) bus, etc. In some embodiment, the bus is divided into address bus, data bus, control bus, etc. For ease of representation, only one thick line is shown in FIG. 6, but it does not mean that there is only one bus or only one type of bus.

In some embodiments, in specific implementations, in the case that the memory 601, processor 602, and communication interface 603 are integrated onto a single chip, they can communicate with each other via an internal interface.

In some embodiments, the processor 602 is a central processing unit (CPU), an application specific integrated circuit (ASIC), or one or more integrated circuits configured to perform embodiments of the present disclosure.

The embodiments further provide a computer-readable storage medium on which a computer program is stored. The program, when loaded and executed by a processor, causes the processor to perform the aforementioned method for controlling the camping mode of the vehicle.

The embodiments further provide a computer program. The program, when loaded and executed by a processor, causes the processor to perform the aforementioned method for controlling the camping mode of the vehicle.

In the description of this specification, references to terms such as "an embodiment", "some embodiments", "an example", "a specific example", or "some examples" indicate that the specific features, structures, materials, or characteristics described in conjunction with the embodiment or example are included in at least one embodiment or example of the present disclosure. In this specification, the illustrative expressions of the aforementioned terms do not necessarily refer to the same embodiment or example. Furthermore, the specific features, structures, materials, or characteristics described can be combined in any one or multiple embodiments or examples in any appropriate manner. Additionally, provided that there is no contradiction, those skilled in the art can combine and integrate different embodiments or examples as well as the features of different embodiments or examples described in this specification.

In addition, the terms "first" and "second" are used solely for descriptive purposes and should not be construed as indicating or implying relative importance or implicitly specifying the number of technical features indicated. Therefore, features defined with "first" and "second" may explicitly or implicitly include one or more such features. In the description of the present disclosure, "N" implies at least two, such as two, three, etc., unless otherwise explicitly and specifically limited.

Any process or method description depicted in the flowchart or otherwise described herein can be understood as representing a module, segment, or portion of code including one or more runnable instructions for implementing customized logical functions or procedures. The scope of the preferred embodiments of the present disclosure includes additional implementations, wherein functions may be performed in a substantially simultaneous manner or in reverse order according to the involved functions, rather than necessarily in the order shown or discussed, which should be understood by those skilled in the technical field to which the embodiments of the present disclosure belong.

The logic and/or processes represented in the flowchart or otherwise described herein, for example, can be considered as a sequential list of runnable instructions for implementing logical functions, which can be specifically embodied in any computer-readable medium for use by or in conjunction with an instruction execution system, apparatus, or device (such as a computer-based system, a system including a processor, or other systems that can fetch and execute instructions from an instruction execution system, apparatus, or device). For the purpose of this specification, "computer-readable medium" includes any device that can contain, store, communicate, propagate, or transmit a program for use by or in conjunction with an instruction execution system, apparatus, or device. More specific examples (not an exhaustive list) of computer-readable media include the following: electrical connection parts (electronic devices) with one or N wires, portable computer disk cartridges (magnetic devices), random access memory (RAM), read-only memory (ROM), erasable programmable read-only memory (EPROM or flash memory), optical fiber devices, and portable compact disc read-only memory (CDROM). Additionally, a computer-readable medium can even be paper or other suitable media on which the program can be printed, as the program can be electronically obtained by optically scanning the paper or other media, followed by editing, interpreting, or processing in other suitable ways as necessary, and then stored in computer memory.

It should be understood that various parts of the present disclosure can be implemented using hardware, software, firmware, or a combination thereof. In the aforementioned embodiments, the N processes or methods can be implemented using software or firmware stored in a memory and executed by a suitable instruction execution system. For example, if implemented using hardware, as in another embodiment, any one or a combination of the following technologies well known in the art can be used: discrete logic circuits with logic gates for implementing logical functions on data signals, application-specific integrated circuits with suitable combinational logic gates, programmable gate arrays (PGA), field programmable gate arrays (FPGA), etc.

Those skilled in the technical field can understand that all or part of the processes in the method of the above embodiments can be implemented by instructing relevant hardware via a program. The program can be stored in a computer-readable storage medium, and when executed by a processor of a computer, cause the computer to perform one or a combination of the processes of the method embodiment.

In addition, the functional units in various embodiments of the present disclosure can be integrated into a single processing module, or each unit can exist physically separately, or two or more units can be integrated into a single module. The aforementioned integrated module can be implemented in the form of hardware or in the form of a software functional module. In the case that the integrated module is implemented in the form of a software functional module and sold or used as an independent product, it can also be stored in a computer-readable storage medium.

The aforementioned storage medium includes a read-only memory, a magnetic disk, or an optical disk, etc. Although some embodiments of the present disclosure have been shown and described above, it is understood that the embodiments described above are exemplary and should not be construed as limiting the present disclosure. Those of ordinary skill in the art may make variations, modifications, substitutions, and alterations to the embodiments described above within the scope of the present disclosure.

## Claims

1. A method for controlling a camping mode of a vehicle, comprising:
acquiring parking information and ignition information of the vehicle in response to detecting that the vehicle enters the camping mode;
determining, based on the parking information and the ignition information, whether the vehicle meets a predetermined independent control condition;
generating a control masking signal for a sunroof of the vehicle based on the camping mode in response to the vehicle meeting the predetermined independent control condition, and masking a linkage program of a sunroof glass and a sunshade of the vehicle using the control masking signal to cause the sunroof glass and sunshade to operate in response to independent control instructions; and
stopping masking the linkage program of the sunroof glass and the sunshade in response to the vehicle exiting the camping mode.

2. The method according to claim 1, wherein subsequent to determining, based on the parking information and the ignition information, whether the vehicle meets the predetermined independent control condition, the method further comprises:
generating one or more reminder messages based on the parking information and the ignition information in response to the vehicle not meeting the predetermined independent control condition; and
providing a parking operation reminder and/or an ignition operation reminder using the one or more reminder messages.

3. The method according to claim 2, wherein subsequent to providing the parking operation reminder and/or the ignition operation reminder using the one or more reminder messages, the method further comprises:
acquiring updated parking information and ignition information in response to reminder time of the one or more reminder messages being greater than or equal to a predetermined time interval, and determining whether the updated parking information and ignition information meet a predetermined switching completion condition; and
determining that the vehicle meets the predetermined independent control condition in response to the updated parking information and ignition information meeting the predetermined switching completion condition; or
determining that the vehicle does not meet the predetermined independent control condition in response to the updated parking information and ignition information not meeting the predetermined switching completion condition, and controlling the vehicle to exit the camping mode.

4. The method according to claim 1, wherein subsequent to masking the linkage program of the sunroof glass and the sunshade of the vehicle using the control masking signal, the method further comprises:
sending a camping shutdown reminder in response to detecting one or more gear adjustment signals, and determining whether a camping mode shutdown instruction is detected; and
exiting the camping mode based on the camping mode shutdown instruction in response to detecting the camping mode shutdown instruction; or
controlling the vehicle to maintain a parking gear in response to failing to detect the camping mode shutdown instruction.

5. The method according to claim 4, wherein prior to exiting the camping mode based on the camping mode shutdown instruction, the method further comprises:
checking whether an opening state of the sunroof meets a predetermined exit condition; and
in a case where the opening state of the sunroof does not meet the predetermined exit condition, stopping shutting down the camping mode and controlling the vehicle to maintain the parking gear.

6. The method according to claim 1, wherein subsequent to masking the linkage program of the sunroof glass and the sunshade of the vehicle using the control masking signal, the method further comprises:
determining whether one or more ignition-off instructions are detected; and
masking an automatic closing program of the sunroof in response to detecting the one or more ignition-off instructions.

7. The method according to any one of claims 1 to 6, wherein the predetermined independent control condition comprises that the parking information indicates that the vehicle is already parked and the ignition information indicates that the vehicle is already in an ignited state.

8. An apparatus for controlling a camping mode of a vehicle, comprising:
an acquiring module, configured to acquire parking information and ignition information of the vehicle in response to detecting that the vehicle enters the camping mode;
a determining module, configured to determine, based on the parking information and the ignition information, whether the vehicle meets a predetermined independent control condition; and
a controlling module, configured to generate a control masking signal for a sunroof of the vehicle based on the camping mode in response to the vehicle meeting the predetermined independent control condition, and mask a linkage program of a sunroof glass and a sunshade of the vehicle using the control masking signal to enable the sunroof glass and sunshade to operate in response to independent control instructions;
wherein the control module is further configured to stop masking the linkage program of the sunroof glass and the sunshade in response to the vehicle exiting the camping mode.

9. The apparatus according to claim 8, further comprising:
a generating module, configured to, subsequent to determining, based on the parking information and the ignition information, whether the vehicle meets the predetermined independent control condition, generate one or more reminder messages based on the parking information and the ignition information in response to the vehicle not meeting the predetermined independent control condition; and
a reminding module, configured to provide a parking operation reminder and/or an ignition operation reminder using the one or more reminder messages.

10. A vehicle, comprising: a memory, a processor, and a computer program stored in the memory and runnable on the processor, wherein the processor, when loading and running the computer program, is caused to perform the method as defined in any one of claims 1 to 7.

11. A computer-readable storage medium, storing a computer program therein, wherein the program, when loaded and executed by a processor, causes the processor to perform the method as defined in any one of claims 1 to 7.
